# EUROPÄISCHE PATENTANMELDUNG

(11) **EP 4 098 143 A1**
(43) Veröffentlichungstag der Anmeldung: **07.12.2022**
(21) Anmeldenummer: 21177170.4
(22) Anmeldetag: 01.06.2021
(51) Int. Cl.: A44B 18/00, B24D 9/08, B29C 45/26, B29C 45/37, B29C 33/30, B29C 45/44, B29C 45/00, B29L 31/00, B29C 45/16, B29K 77/00

(54) **WERKZEUGEINSATZ FÜR DIE HERSTELLUNG EINES KOMPLEX GEFORMTEN GEGENSTANDS, HERSTELLUNGSVERFAHREN UND KOMPLEX GEFORMTER GEGENSTAND**

(71) Anmelder: Hilti Aktiengesellschaft, 9494 Schaan (LI)
(72) Erfinder: Marder, Johannes Alfred, 6800 Feldkirch (AT); Bartholomee, Ward, 52072 Aachen (DE)
(74) Vertreter: Hilti Aktiengesellschaft Corporate Intellectual Property

(57) **Zusammenfassung**

Die vorliegende Erfindung betrifft einen Werkzeugeinsatz für die Herstellung eines komplex geformten Gegenstands im Spritzguss-Verfahren, wobei das vorgeschlagene Spritzguss-Werkzeug einen Einsatzrahmen und mindestens ein Blechpaket mit einer Vielzahl von Einzelblechen umfasst, wobei das mindestens eine Blechpaket in dem Einsatzrahmen eingesetzt vorliegt. In weiteren Aspekten betrifft die Erfindung ein Verfahren und ein System zur Herstellung eines komplex geformten Gegenstands mit gewölbten Oberflächen unter Verwendung des vorgeschlagenen Werkzeugeinsatzes, sowie einen komplex geformten Gegenstand, der mit dem vorgeschlagenen Verfahren hergestellt werden kann. Das System zur Herstellung eines komplex geformten Gegenstands umfasst einen Werkzeugeinsatz, sowie ein Schiebe-Element. Ein Grundgedanke der Erfindung besteht darin, dass gewölbte Oberflächen in den komplex geformten Gegenstand dadurch einbringbar sind, dass der Einsatzrahmen gewölbte Oberflächen aufweist und/oder mindestens ein Verzugskissen zwischen dem Einsatzrahmen und dem mindestens einen Blechpaket angeordnet vorliegt.

## Beschreibung

Die vorliegende Erfindung betrifft einen Werkzeugeinsatz für die Herstellung eines komplex geformten Gegenstands im Spritzguss-Verfahren, wobei das vorgeschlagene Spritzguss-Werkzeug einen Einsatzrahmen und mindestens ein Blechpaket mit einer Vielzahl von Einzelblechen umfasst, wobei das mindestens eine Blechpaket in dem Einsatzrahmen eingesetzt vorliegt. In weiteren Aspekten betrifft die Erfindung ein Verfahren und ein System zur Herstellung eines komplex geformten Gegenstands mit gewölbten Oberflächen unter Verwendung des vorgeschlagenen Werkzeugeinsatzes, sowie einen komplex geformten Gegenstand, der mit dem vorgeschlagenen Verfahren hergestellt werden kann. Das System zur Herstellung eines komplex geformten Gegenstands umfasst einen Werkzeugeinsatz, sowie ein Schiebe-Element. Ein Grundgedanke der Erfindung besteht darin, dass gewölbte Oberflächen in den komplex geformten Gegenstand dadurch einbringbar sind, dass der Einsatzrahmen gewölbte Oberflächen aufweist und/oder mindestens ein Verzugskissen zwischen dem Einsatzrahmen und dem mindestens einen Blechpaket angeordnet vorliegt.

### Hintergrund der Erfindung:

Im Stand der Technik ist die Verwendung von Werkzeugeinsätzen für die Verwendung als Form in Spritzguss-Verfahren bekannt, wobei die Werkzeugeinsätze Blechpakete aus einer Vielzahl von Einzelpaketen umfassen können. Solche Werkzeugeinsätze können auch Spritzguss-Werkzeuge bezeichnet werden. Solche Spritzguss- Werkzeuge können insbesondere für die Herstellung von komplex geformten Gegenständen, wie zum Beispiel Schleifteller für Schleifscheiben zur Verwendung in einer Schleifmaschine, verwendet werden. Die Blechpakete können in einem Einsatzrahmen angeordnet vorliegen und die Einzelbleche der Blechpakete können vertiefte Mikrostrukturen aufweisen, die eine Mikrostrukturierung der Oberfläche des herzustellenden komplex geformten Gegenstands ermöglichen. Beispielsweise wäre es wünschenswert, wenn mit solchen Werkzeugeinsätzen Kletthaken auf einer Oberflache des Schleiftellers angespritzt werden könnten. Die Kletthaken können dann mit einem Klettvlies auf einer Unterseite eines Schleifaufsatzes zusammenwirken und eine Klett(verschluss)verbindung bilden, mit der der Schleifaufsatz an dem Schleifteller befestigt werden kann.

Im Stand der Technik sind Schleifmaschinen zur Bearbeitung von Untergründen bekannt. Solche Schleifmaschinen weisen einen Motor auf, mit dem eine Schleifscheibe angetrieben werden kann. Die Schleifscheibe umfasst einen Schleifteller, sowie einen Schleifaufsatz. Der Schleifaufsatz umfasst ein Schleifmittel, das in Kontakt mit dem Untergrund gebracht wird und durch eine Rotationsbewegung der Schleifscheibe den Untergrund bearbeitet. Es ist bekannt, dass sich der Schleifaufsatz bzw. das Schleifmittel abnutzen kann, so dass der Aufsatz regelmäßig ausgetauscht werden muss. Um einen solchen Austausch zu ermöglichen, sind im Stand der Technik verschiedene Verbindungsmethoden zwischen Schleifteller und Schleifaufsatz bekannt. Insbesondere können Schleifteller und Schleifaufsatz mit einer Klettverschlussverbindung miteinander verbunden werden. Dabei sind die Kletthaken üblicherweise auf dem Schleifteller und das Klettvlies auf dem Schleifaufsatz angebracht. Die Kletthaken bilden zumeist ein Kletthakengewebe, das auf den Schleifteller aufgeklebt wird, wobei sich diese Klebeverbindung in der Vergangenheit als technisch herausfordernd herausgestellt hat. Insbesondere gehen mit der Klebeverbindung Nachteile einher, wie eine aufwändige Vorbehandlung der beteiligten Komponenten durch mechanisches Nacharbeiten, Entfetten, Applikation eines Primers, eine geringe Prozesssicherheit, das Erfordernis von manuellen Arbeitsschritten, sowie einer mehrteiligen Prozesskette mit einem Spitzgießen des Grundkörpers des Schleiftellers, einer Nachbearbeitung der Komponenten und einer Applikation des Klettbandes. Als Folge ist der Herstellungsprozess für Schleifscheiben, bei denen ein Kletthakengewebe mit einer Klebeverbindung an dem Schleifteller befestigt wird, kostenintensiv, komplex und personalaufwändig.

Um die Nachteile einer Klebeverbindung zu überwinden, ist im Stand der Technik vorgeschlagen worden, die Kletthaken im Spritzgussverfahren herzustellen und an den Schleifteller _{"}anzuspritzen". Beispielsweise wird in der US 5 656 226 A vorgeschlagen, geschichtete Werkzeugeinsätze zu verwenden, um die Kletthaken an einer Oberfläche des Schleiftellers zu applizieren. Dabei wird die Geometrie der Kletthaken wiederholt in dünne Bleche geschnitten, wobei diese Bleche zu einem Blechstapel zusammengefügt werden, wodurch der geschichtete Werkzeugeinsatz erhalten wird. Insbesondere könne auf diese Weise hinterschnittige Mikrostrukturen realisiert werden.

Das Einbringen der Geometrie der Kletthaken in die Einzelbleche kann beispielsweise durch ein Funkenerosionsverfahren erfolgen, das im Kontext der vorliegenden Erfindung als Mikrostrukturierung bezeichnet wird. Die Kletthaken werden im Kontext der vorliegenden Erfindung verallgemeinernd als Sub-Strukturen bezeichnet. Sie bilden vorzugsweise eine Mikrostruktur auf der Oberfläche des komplex geformten Gegenstands, womit in einem Ausführungsbeispiel der Erfindung die Kletthakenschicht bezeichnet wird, die auf der Oberfläche des Schleiftellers angebracht bzw. angespritzt werden kann.

Allerdings weisen die aus dem Stand der Technik bekannten Verfahren, wie sie beispielsweise in US 5 656 226 A beschrieben werden, verschiedene Nachteile auf. Zum einen steht häufig bei den mit konventionellen Spritzguss-Verfahren nur ein Teil der Gesamtfläche für das Aufbringen der Mikrostruktur zur Verfügung. Das bedeutet, dass nur ein Teil der zur Verfügung stehenden Oberfläche des komplex geformten Gegenstands, der hergestellt werden soll, mit der Mikrostruktur und ihren Sub-Strukturen versehen sein kann. In dem konkreten Ausführungsbeispiel der Erfindung kann sich dies nachteilig auf die Haftwirkung zwischen dem Schleifteller und dem Schleifaufsatz auswirken, wenn nicht die gesamte Oberfläche des Schleiftellers mit der Kletthakenschicht versehen ist, um mit dem Klettvlies des Schleifaufsatzes die Klettverbindung zu bilden.

Darüber hinaus sind die Sub-Strukturen, die mit konventionellen Werkzeugeinsätzen hergestellt werden, wie sie aus dem Stand der Technik bekannt sind, zumeist entlang einer Geraden und parallel zueinander angeordnet. Eine solche Anordnung kann aber zur einer nicht-optimalen Kraftübertragung führen, wenn die Sub-Strukturen zum Beispiel als Kletthaken für einen Schleifteller einer Schleifscheibe verwendet werden. Der Schleifteller weist üblicherweise eine im Wesentlichen kreisförmige Grundform auf, während seine Oberfläche, die mit dem Schleifsausatz verbunden werden soll, im Wesentlichen ringförmig ausgebildet ist. Für diese runden oder ringförmigen Gegenstände kann die Verwendung von Blechpaketen, die üblicherweise eine eckige Grundform aufweisen und bei denen die Sub-Strukturen entlang einer Geraden und parallel zueinander vorliegen, zu einer ungünstigen Anordnung der Mikrostrukturierung führen.

Mithin zeigen sich insbesondere die folgenden Nachteile bei den konventionellen Spritzguss-Verfahren, wie sie aus dem Stand der Technik bekannt sind:
1. Die Sub-Strukturen weisen zumeist eine einzige, gerade Orientierung auf. Sollen die Sub-Strukturen entlang der Lastrichtung einer nicht geradlinig wirkenden Schubspannung orientiert werden, ist eine Einteilung in gerade Segmente erforderlich.
2. Werden komplexe Bauteile aus Kunststoffen im Mehrkomponenten-Spritzguss-Verfahren hergestellt, kann sich ein dreidimensionaler "Verzug" einstellen. Der Begriff "Verzug" ist im Sinne der Erfindung als Abweichung von einer Geometrie der Werkzeugkavität durch prozessinduzierte Spannungen zu verstehen. Für gewöhnlich muss eine solche ungewollte Verformung in einem iterativen Prozess "gegengehalten" werden, d.h. die Verformung des Bauteils wird invertiert in das Werkzeug eingebracht. Hierzu muss die Oberfläche des Spritzguss-Werkzeugs mechanisch bearbeitet werden. Mit Kletthaken oder anderen Sub-Strukturen funktionalisierte Oberflächen verlieren so ihre gewünschte, die Funktionalität tragende Mikrostrukturierung. Tests haben gezeigt, dass der dreidimensionale Verzug bei im Wesentlichen radialsymmetrischen Formen in radialsymmetrischer Form auftritt.

Die Aufgabe, die der vorliegenden Erfindung zugrunde liegt, besteht darin, die vorstehend beschriebenen Mängel und Nachteile des Standes der Technik zu überwinden und einen Werkzeugeinsatz und ein Verfahren zur Herstellung eines komplex geformten Gegenstands im Spritzguss-Verfahren anzugeben, mit der eine lastpfadgerechte Orientierung der Sub-Strukturen der Mikrostruktur ermöglicht wird. Darüber hinaus soll das Gegenhalten von Verzügen ermöglicht werden, um einen herstellungsbedingten Funktionalitätsverlust der Oberflächen der komplex geformten Gegenstände zu vermeiden. Die Fachwelt würde es des Weiteren begrüßen, wenn die Sub-Strukturen in einer Umfangsrichtung des komplex geformten Gegenstands orientiert sein könnten und mit der Erfindung eine verbesserte Mikrostrukturierung von solchen komplex geformten Gegenständen ermöglicht werden könnte, die eine runde oder ringförmige Grundform aufweisen. Ein weiteres Anliegen, das der Erfindung zugrunde liegt, besteht darin, dass eine Verbindung zwischen dem komplex geformten Gegenstand und einem damit zu verbindenden anderen Gegenstand möglichst robust und stark sein soll. Beispielsweise soll im Kontext der vorliegenden Erfindung eine möglichst haltbare und schwer zu lösende Verbindung zwischen einem Schleifteller und einem Schleifaufsatz bereitgestellt werden. Neben dem Werkzeugeinsatz und dem Herstellungsverfahren soll darüber hinaus ein komplex geformter Gegenstand bereitgestellt werden, der unter Verwendung des Werkzeugeinsatzes und mit dem Herstellungsverfahren hergestellt werden kann.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen

### Beschreibung der Erfindung:

Erfindungsgemäß ist ein Werkzeugeinsatz für die Herstellung eines komplex geformten Gegenstands im Spritzguss-Verfahren vorgesehen, wobei der Werkzeugeinsatz einen Einsatzrahmen und mindestens ein Blechpaket mit einer Vielzahl von Einzelblechen umfasst, wobei das mindestens eine Blechpaket in dem Einsatzrahmen eingesetzt vorliegt. Der Werkzeugeinsatz ist dadurch gekennzeichnet, dass mindestens eine gewölbte Oberfläche in den komplex geformten Gegenstand dadurch eingebracht werden können, dass der Einsatzrahmen gewölbte Oberflächen aufweist und/oder mindestens ein Verzugskissen zwischen dem Einsatzrahmen und dem mindestens einen Blechpaket angeordnet vorliegt. Der Begriff "Werkzeug" wird im Sinne der Erfindung bevorzugt als "Gussform" verstanden, wobei eine solche Gussform zur Herstellung von Gegenständen oder Objekten verwendet werden kann.

Die Erfindung bezieht sich insbesondere auf einen Werkzeugeinsatz, der aufgrund des Blechpakets, das er umfasst, vorzugsweise als «laminarer Werkzeugeinsatz» bezeichnet werden kann. Ferner kann der Werkzeugeinsatz auch als «Spritzguss-Werkzeug» bezeichnet werden. Es ist im Sinne der Erfindung bevorzugt, dass in dem Werkzeugeinsatz die abzuformende Mikrostruktur mit ihren Sub-Strukturen als negativ enthalten ist. Diese negative Gegenstruktur, die in dem Werkzeugeinsatz bzw. in den Einzelblechen der Blechpakete enthalten ist, wird im Sinne der Erfindung als "vertiefte Mikrostruktur" oder als "negative Mikrostruktur" bezeichnet.

Ein Anliegen der Erfindung ist es, dass in den herzustellenden komplex geformten Gegenstand gewölbte Flächen eingebracht werden können. Dazu schlägt die Erfindung vor, dass der Einsatzrahmen des Spritzguss-Werkzeugs mindestens eine gewölbte Oberfläche aufweist. Alternativ oder ergänzend dazu kann ein Verzugskissen zwischen dem Einsatzrahmen und dem mindestens einen Blechpaket angeordnet vorliegen. Es ist im Sinne der Erfindung bevorzugt, dass das Verzugskissen und/oder die gewölbten Oberflächen des Einsatzrahmens eine Oberflächenlinie einer gewünschten Oberfläche des komplex geformten Gegenstands nachbilden. Indem das Verzugskissen und/oder die gewölbten Oberflächen des Einsatzrahmens die Oberflächenlinie der gewünschten Oberfläche des komplex geformten Gegenstands nachbilden, kann bei der Herstellung des komplex geformten Gegenstands eine gewölbte Oberfläche mit gewünschter Ausgestaltung erzeugt werden. Dieser Vorteil der vorgeschlagenen Erfindung kann beispielsweise bei der Herstellung von Schleiftellern als komplex geformten Gegenstand ausgenutzt werden, indem der Schleifteller nach seiner Herstellung trotz des auftretenden Verzugs eine ebene, mikrostrukturierte Fläche aufweist. Dies kann vorzugsweise dadurch erreicht werden, dass der Werkzeugeinsatz eine gewölbte Fläche zur Herstellung eines mikrostrukturierten Schleiftellers mit einer hohen Ebenheit aufweist. Es ist im Sinne der Erfindung bevorzugt, dass die Wölbung in Zusammenspiel mit der Mikrostrukturierung durch die Sub-Strukturen die Komplexität des zu formenden Gegenstands ausmacht. Es war vollkommen überraschend, dass Werkzeugeinsätze für die Herstellung solcher komplexen Strukturen, wie beispielsweise Schleifteller, bereitgestellt werden können. Es ist im Sinne der Erfindung bevorzugt, dass die Wölbung eine nicht-plane Oberfläche des Gegenstands darstellt, wobei im Sinne der Erfindung auch Vertiefungen oder Öffnungen solchen nicht-planen Oberflächen darstellen können. Es ist im Sinne der Erfindung bevorzugt, dass der vorgeschlagene Werkzeugeinsatz beispielsweise eine Wölbung aufweist, die vorzugsweise dazu eingerichtet ist, die Herstellung eines nicht-planen Gegenstands mit Mikrostrukturierung zu ermöglichen. Selbstverständlich kann der Werkzeugeinsatz auch andere, bevorzugt nicht-plane Bereiche aufweisen, um beispielsweise Vertiefungen oder Öffnungen in den komplex geformten Gegenstand einzubringen.

Es stellt einen wesentlichen Vorteil der Erfindung dar, dass mit einem nicht-ebenen Werkzeugeinsatz ein Produkt hergestellt werden kann, dass aufgrund der im Herstellungsprozess berücksichtigten und eingeplanten Verzüge eine gewünschte Form, die beispielsweise eben sein kann, einnimmt. Ein weiterer Vorteil der Erfindung besteht darin, dass die bevorzugt ebene Werkzeugoberfläche mit Mikrostrukturierung durch eine Bearbeitung des Verzugskissens iteriert werden kann, ohne dass die Bleche des bevorzugt laminar ausgebildeten Werkzeugeinsatzes veränderte werden müssen. Dieser Vorteil wird insbesondere dadurch erreicht, dass ein Gegenhalten durchgeführt wird, bei dem das Inverse des Verzugs des gewünschten komplex geformten Gegenstands zum Einsatz kommt. Der Begriff des "Inversen des Verzugs des gewünschten komplex geformten Gegenstands" umfasst beispielsweise eine Gegenform, die gedanklich zum Beispiel durch einen dreidimensionalen Abdruck erhalten werden kann. Das Inverse einer Wölbung ist beispielsweise eine Vertiefung, oder umgekehrt. Mit anderen Worten kann das Inverse eines konkav geformten Gegenstands von einer konvexen Struktur gebildet werden, oder umgekehrt.

Es ist im Sinne der Erfindung bevorzugt, dass die Einzelbleche des Blechpakets unterschiedliche Funktionalitäten aufweisen, die durch eine unterschiedliche Mikrostrukturierung der Einzelbleche vermittelt wird.

Beispielsweise können die Sub-Strukturen der Mikrostruktur bzw. die Kletthaken der Kletthakenschicht mit Werkzeugeinsätzen erzeugt werden, die beispielsweise alternierend gestapelte Blechpakete umfassen. Der vorgeschlagene Schleifteller bzw. der vorgeschlagene komplex geformte Gegenstand können insbesondere mit einem laminaren Werkzeugeinsatz hergestellt werden, wobei die Werkzeugeinsätze als Formen für das Spritzguss-Verfahren dienen. Dabei kann der laminare Werkzeugeinsatz eine Vielzahl von einzelnen Blechen umfassen, die einen Blechstapel bzw. ein Blechpaket bilden. Aus diesem Blechpaket können bei Einbringen der Mikrostrukturen einzelne Bleche entfernt werden, die beim Aufbau des finalen Blechpakets als Abstandhalter in Normalenrichtung der mikrostrukturierten Bleche dienen können. Die verbliebenen Bleche können funktionalisiert werden, indem negative Mikrostrukturen in die Bleche eingebracht werden. Diese negativen oder vertieften Mikrostrukturen können die Formen für die zu erzeugenden Kletthaken der Kletthakenschicht oder für die Sub-Strukturen der Mikrostruktur bilden. Die negativen Mikrostrukturen bilden vorzugsweise Vertiefungen, in das ein bevorzugt unverstärkter Kunststoff eindringen kann. Nach der Abkühlung und einer Zwangsentformung des Schleiftellers bzw. des komplex geformten Gegenstands bildet das Material, das in den vertieften Mikrostrukturen des laminaren Werkzeugeinsatzes vorlag, die Kletthaken der Kletthakenschicht bzw. die Sub-Strukturen der Mikrostruktur.

Der Blechstapel kann nach dem Einbringen der vertieften Mikrostrukturen beispielsweise alternierend zusammengesetzt werden, wodurch ein Orientierungsmuster von abwechselnd A- und B-orientierten radial angeordneten Kletthakenreihen bzw. Reihen von Sub-Strukturen gebildet werden kann. Dadurch wird vorteilhafterweise eine Anordnung der radialen Reihen ermöglicht, bei der die Reihen abwechselnd im Uhrzeigersinn und gegen den Uhrzeigersinn orientiert sein können. Beispielsweise kann der Blechstapel eine Abfolge von wie folgt angeordneten Blechen enthalten: 1) Blech mit einer Mikrostruktur, die Kletthaken oder Sub-Strukturen mit einer A-Orientierung erzeugt, 2) Distanzblech als Abstandhalter, 3) Blech mit einer Mikrostruktur, die Kletthaken oder Sub-Strukturen mit einer B-Orientierung erzeugt, 4) Distanzblech als Abstandhalter usw.

Die einzelnen Reihen von Sub-Strukturen werden bevorzugt jeweils von einem Einzelblech erzeugt. Beispielsweise können die A- und B-orientierten Kletthaken die Funktion(alität) aufweisen, den Schleifteller besonders fest mit dem Schleifaufsatz zu verbinden, während die Bleche, die als Abstandhalter fungieren, beispielsweise eine Entlüftung des beim Spritzguss-Verfahrens eingefüllten flüssigen Kunststoffmaterials ermöglichen. Insofern tragen die unterschiedlich strukturierten Einzelbleche zu den unterschiedlichen Funktionen der Sub-Strukturen der Mikrostruktur bei.

Die Formulierung «Blechpaket» oder «Blech» ist im Sinne der Erfindung so zu verstehen, dass die einzelnen Komponenten, die die Schichten in den «Blechpaketen» der Werkzeugeinsätze bilden, selbstverständlich nicht nur aus Blech, sondern auch aus anderen Materialien bzw. Metallen gebildet sein können oder diese umfassen. Der Begriff «Blech» ist daher im Sinne der Erfindung als bevorzugt metallischer Bestandteil eines laminaren Werkzeugeinsatzes zu verstehen, in den beispielsweise negative Mikrostrukturen eingebracht werden können oder der als Abstandhalter zwischen funktionalisierten «Blechen» innerhalb des Werkzeugeinsatzes dienen kann. Der Begriff «Blechpaket» ist im Sinne der Erfindung als Anordnung einer Vielzahl solcher Bleche zu verstehen, wobei eine laminarer Werkzeugeinsatz mindestens ein Blechpaket aus vorzugsweise alternierend angeordneten Einzelblechen umfasst.

Ein weiterer Vorteil, der mit der Erfindung realisiert werden kann, besteht darin, dass nicht nur eine lastgerechte Orientierung der Sub-Strukturen der Mikrostruktur ermöglicht werden kann, sondern, dass mit der Erfindung auch komplex geformte Gegenstände mit erweiterten bzw. zusätzlichen Funktionalitäten hergestellt werden können. Wenn der komplex geformte Gegenstand beispielsweise eine Öffnung oder eine Vertiefung aufweisen soll, um eine spezielle Aufgabe zu erfüllen, kann die Erfindung beispielsweise dazu verwendet werden, die Mikrostrukturierung des Gegenstands um die Öffnung oder Vertiefung herum zu führen. Das bedeutet im Sinne der Erfindung bevorzugt, dass die Sub-Strukturen der Mikrostruktur so auf dem komplex geformten Gegenstand angeordnet werden können, dass sie gerade nicht im Bereich der Öffnung oder der Vertiefung vorliegen, sondern in einer für den spezifischen komplex geformten Gegenstand optimierten Anordnung. Vorzugsweise können mit dieser optimierten Anordnung weitere Funktionalitäten des komplex geformten Gegenstands bereitgestellt werden.

Eine Erkenntnis, der der Erfindung zugrunde liegt, besteht darin, dass laminaren, nicht miteinander verbundene Einzelbleche der Blechpakete des vorgeschlagenen Werkzeugeinsatzes nur in sehr geringem Maße Schubspannungen durch Querkraft aufnehmen können. Entsprechend weisen die Einzelbleche lediglich ein geringes Flächenträgheitsmoment auf. Der Begriff "Flächenträgheitsmoment" wird im Sinne der Erfindung bevorzugt als ein Widerstand gegen eine Verformung verstanden. Diese Eigenschaft ermöglicht es, konkave und konvexe Wölbung durch eine Verspannung des Blechpakets zwischen zwei konturgebenden Oberflächen zu erzielen. Somit lassen sich die Mikrostrukturen durch die gezielte Formgebung eines Einsatzrahmens in der Ebene frei orientieren.

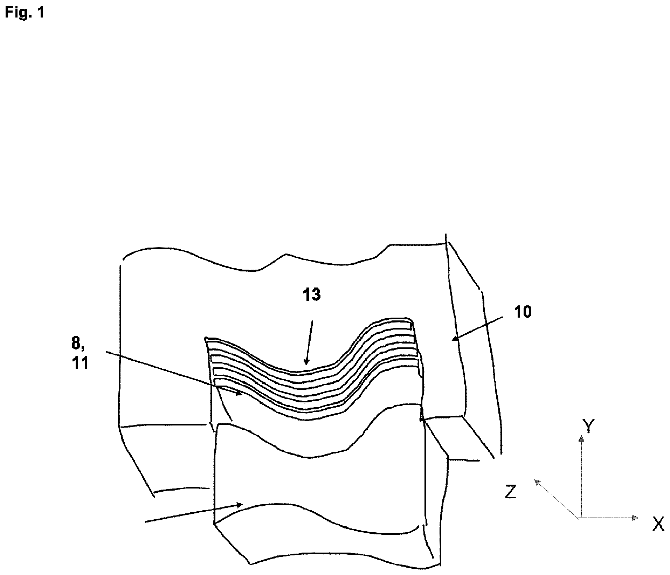

In einem weiteren Aspekt betrifft die Erfindung somit ein System zur Herstellung eines komplex geformten Gegenstands, wobei das System einen vorgeschlagenen Werkzeugeinsatz umfasst, sowie ein Schiebe-Element, wobei das Schiebe-Element eine Oberfläche aufweist, die als Gegenkontur zu einer gewölbten Oberfläche des Einsatzrahmens ausgebildet ist. Es ist im Sinne der Erfindung bevorzugt, dass ein Schiebe-Element verwendet werden kann, dass vorzugsweise eine Gegenkontur zur bevorzugt gewölbten Oberfläche des Blechpakets aufweist. Das Schiebe-Element kann im Sinne der Erfindung bevorzugt auch als "Schieber" oder als Stempel bezeichnet werden. Gemeint ist mit diesen Begriffen ein vorzugsweise beweglich ausgebildetes Form-Element in einem Werkzeugeinsatz, dass mit oder unabhängig von der Öffnungsbewegung bewegt werden kann. Solche Schiebe-Element können insbesondere bei Spritzgussverfahren zum Einsatz kommen. Sie sind insbesondere dazu eingerichtet, hinterschnittige Teile oder Strukturen zu entformen. Es ist im Sinne der Erfindung bevorzugt, dass das Schiebe-Element ein konkave/konvexe Gegenkontur zu einer konvexen/konkaven Oberfläche des Einsatzrahmens des Werkzeugeinsatzes aufweist. Dabei kann die Oberfläche des Einsatzrahmens des Werkzeugeinsatzes als konturgebende Seite für den herzustellenden komplex geformten Gegenstand bezeichnet werden, während das Schiebe-Element vorzugsweise dazu korrespondierend ausgebildet ist. Das Schiebe-Element ist vorzugsweise stempelartig und/oder beweglich ausgebildet, um das Schiebe-Element aus der Öffnung des Einsatzrahmens des Werkzeugeinsatzes zu entfernen und die Bleche bzw. Blechpakete einlegen zu können. Das bedeutet im Sinne der Erfindung bevorzugt, dass das Schiebe-Element beweglich und aus der Öffnung des Einsatzrahmens des Werkzeugeinsatzes entfernbar ausgebildet ist, um ein Einlegen der Bleche bzw. Blechpakete zur Erzeugung der Mikrostrukturierung des herzustellenden Gegenstands zu ermöglichen. Das vorgeschlagene System zur Herstellung eines komplex geformten Gegenstands wird in Fig. 1 dargestellt.

Die Möglichkeit der der Orientierung der Mikrostrukturen durch eine Verpressung des Blechstapels zwischen konturgebenden Oberflächen des Einsatzrahmens, wird im Kontext der vorliegenden Erfindung dadurch erreicht, dass gewölbte Oberflächen dadurch in den komplex geformten Gegenstand eingebracht werden können, dass der Einsatzrahmen gewölbte Oberflächen aufweist.

Neben der Möglichkeit, die Mikrostrukturen in der Ebene frei zu orientieren, wird im Rahmen der vorliegenden Erfindung eine Möglichkeit vorgeschlagene, die Oberfläche der Mikrostruktur in Z-Richtung zu beeinflussen, ohne dass die Blechpakete mit der Mikrostruktur mechanisch nachgearbeitet werden müssen. Dies wird dadurch erreicht, dass mindestens ein sogenanntes "Verzugskissen" zwischen dem Einsatzrahmen und dem mindestens einen Blechpaket angeordnet vorliegt, um gewölbte Oberflächen in den herzustellenden komplex geformten Gegenstand einzubringen. Mit anderen Worten ist das Verzugskissen zum Gegenhalten etwaiger Verzüge ausgebildet.

Beispielsweise lässt sich unter dem Blechpaket ein "Verzugskissen" platzieren, welches die Oberflächenlinie der gewünschten Oberfläche abbildet. Da die Einzelbleche an diesem "Verzugskissen" anschlagen, bilden sie Oberflächenlinie bzw. die gewünschte Oberflächenform gestuft ab. Zur Nacharbeit oder Iteration des Verzugs ist lediglich ein Anpassen des Verzugskissens erforderlich, ohne dass das Blechpaket nachgearbeitet werden muss. Insbesondere ermöglicht die Vorsehung eines Verzugskissens ein Gegenhalten von Verzug in Z-Richtung. Die X-, Y- und Z-Richtungen werden in den Figuren und in der Figurenbeschreibung erläutert.

Vorteilhaft an der Verwendung eines Verzugskissens ist insbesondere, dass die einmal hergestellten Blechpakete nicht geändert werden müssen, wenn iterativ minimale Korrekturen oder Veränderungen an dem herzustellenden Gegenstand bzw. den herzustellenden Sub-Strukturen erforderlich sind. Vielmehr ermöglicht die Vorsehung eines Verzugskissens, dass nur das Verzugskissen selbst bearbeitet und verändert werden muss, um minimale Korrekturen oder Veränderungen an dem durch das Spritzguss-Verfahren zu erzeugenden Gegenstand, hier dem Schleifteller, vorzunehmen.

Es ist im Sinne der Erfindung bevorzugt, dass das Blechpaket in einem Einsatzrahmen angeordnet vorliegt, wobei das Blechpaket in dem Einsatzrahmen den laminaren Werkzeugeinsatz bildet. Bei Einsatz eines Verzugskissens ist es im Sinne der Erfindung bevorzugt, dass das Verzugskissen zwischen den Einsatzrahmen und dem Blechpaket angeordnet vorliegt. Vorzugsweise bildet das Verzugskissen die Oberflächenlinie der gewünschten Oberfläche ab. Da die Bleche des Blechpakets an dem Verzugskissen anschlagen, bilden die Bleche bzw. die Blechpakete diese Oberfläche - vorzugsweise gestuft - ab. Zur Nacharbeit bzw. Iteration des Verzugs ist lediglich ein Anpassen des Verzugskissens erforderlich, ohne dass das Blechpaket bzw. der Werkzeugeinsatz nachgearbeitet werden muss.

Eine alternative Möglichkeit, komplex geformte Bauteile herzustellen, besteht darin, dass der Einsatzrahmen konkav oder konvex gewölbte Oberflächen aufweist, die wie ein Verzugskissen wirken können. Die Wölbungen der Oberfläche des Einsatzrahmens übertragen sich auf das Blechpaket, das - wie beschrieben - in den Einsatzrahmen eingesetzt wird. Es ist im Kontext dieser Ausgestaltung der Erfindung bevorzugt, dass die Blechpakete beispielsweise zwischen zwei konturgebende Oberflächen verspannt wird, so dass sich die gewünschten Mikrostrukturen, wie die Kletthaken der Kletthakenschicht, durch eine gezielte Formgebung des Einsatzrahmens herstellen lassen. Darüber hinaus können die Mikrostrukturen durch das vorgeschlagene Verfahren in der Ebene frei orientiert werden.

Mit der Erfindung ermöglichen die Erfinder eine wirtschaftliche und kostengünstige Herstellung von Spritzguss-Werkzeugen für komplex geformte Bauteile mit einer nicht ebenen, nicht linear orientierten Oberfläche, die darüber hinaus mit einer Mikrostruktur funktionalisiert sein kann. Die Erfindung kann vorteilhafterweise zur Orientierung der Mikrostrukturierung in der Werkzeugebene (x-y Ebene) oder beispielsweise zum Gegenhalten von Verzug mit einer Z-Orientierung genutzt werden.

In einem zweiten Aspekt betrifft die Erfindung ein Verfahren zur Herstellung eines komplex geformten Gegenstands mit gewölbten Oberflächen unter Verwendung eines vorgeschlagenen Werkzeugeinsatzes. Das Verfahren zur Herstellung des komplex geformten Gegenstands ist durch folgende Verfahrensschritte gekennzeichnet:
a) Bereitstellung eines Blechpakets, das eine Vielzahl von Einzelblechen umfasst,
b) Bereitstellung eines Einsatzrahmens zur Aufnahme des Blechpakets, wobei der Einsatzrahmen und das Blechpaket den Werkzeugeinsatz bilden,
c) Einbringen von gewölbten Oberflächen in den komplex geformten Gegenstand dadurch, dass der Einsatzrahmen gewölbte Oberflächen aufweist und/oder dadurch dass mindestens ein Verzugskissen zwischen dem Einsatzrahmen und dem mindestens einen Blechpaket angeordnet vorliegt.

Es ist im Sinne der Erfindung bevorzugt, dass das Blechpaket in einen Einsatzrahmen des Werkzeugeinsatzes eingesetzt vorliegt.

In einem weiteren Aspekt betrifft die Erfindung einen komplex geformten Gegenstand, der mit dem vorgeschlagenen Herstellungsverfahren herstellbar ist, wobei der komplex geformte Gegenstand einen Grundkörper und eine Mikrostruktur auf der Oberfläche des Grundkörpers aufweist, wobei der Grundkörper einen faserverstärkten Kunststoff umfasst und die Mikrostruktur einen unverstärktem Kunststoff umfasst. Die für den Werkzeugeinsatz eingeführten Begriffe, Definitionen und technischen Vorteile gelten vorzugsweise für das vorgeschlagene Herstellungsverfahren, sowie für den komplex geformten Gegenstand analog. In einem Ausführungsbeispiel der Erfindung kann es sich bei dem komplex geformten Gegenstand um einen Schleifteller handeln, an dessen Oberfläche eine Kletthakenschicht mit Kletthaken angespritzt werden kann. Dabei kann der Schleifkörper ein faserverstärktes Material und die Kletthakenschicht ein unverstärktes Material umfassen.

Mit anderen Worten betrifft die Erfindung in einem Ausführungsbeispiel einen Schleifteller, der einen Grundkörper als tragende Struktur umfasst, sowie eine vorzugsweise vollständig mit Kletthaken bedeckte, spritzgegossenen Schicht auf der Oberfläche des Schleiftellers umfasst. Der Grundkörper ist vorzugsweise aus einem steifen Material hergestellt, während die Kletthakenschicht eine Weichkomponente darstellt und aus einem weicheren, unverstärkten KunststoffMaterial besteht. Der Schleifteller dient zur Aufnahme eines Schleifaufsatzes mit einer Vliesunterseite und einer Funktionsseite, wobei die Funktionsseite vorzugsweise mit einem Schleifmittel versehen ist.

Tests haben gezeigt, dass Schleifteller, bei denen der Grundkörper einen faserverstärkten Kunststoff umfasst und die Kletthakenschicht einen unverstärktem Kunststoff umfasst, eine hohe Biegesteifigkeit aufweisen und damit sehr gut für das Schleifen, insbesondere von harten Untergründen, wie Beton, geeignet sind. Darüber hinaus können die vorgeschlagenen Schleifteller durch das 2K-Spritzguss-Verfahren besonders einfach und kostengünstig hergestellt werden, wobei insbesondere der Personalaufwand und die Anzahl der manuellen Prozessschritte erheblich reduziert werden kann.

Es ist im Sinne der Erfindung bevorzugt, dass als faserverstärkter Kunststoff für den Grundkörper des Schleifteller Materialien, wie faserverstärktes Polyamid 6 (PA6) bzw. Polyamid 66 (PA66) mit einem Masseanteil an Glasfasern, der größer als 30 % ist, verwendet werden. Es ist im Sinne der Erfindung insbesondere bevorzugt, für den strukturellen Grundkörper den faserverstärkte Kunststoff PA6GF30 zu verwenden. Die Weichkomponente, aus der vorzugsweise die Kletthakenschicht mit den Kletthaken gebildet wird, kann beispielsweise aus PA6 gefertigt werden. Es hat sich gezeigt, dass diese Materialkombination besonders gut geeignet ist, um die Komponenten des vorgeschlagenen Schleiftellers, vorzugsweise in einem Prozess, herzustellen. Insbesondere ermöglicht die Materialkombination aus PA6GF30 für den Grundkörper und PA6 für die Kletthakenschicht eine starke, robuste Verbindung zwischen den Komponenten des vorgeschlagenen Schleiftellers, sowie Flexibilität bei der Herstellung. Es ist beispielsweise möglich, die Komponenten des Schleiftellers form- oder stoffschlüssig miteinander zu verbinden.

Mit dem vorgeschlagenen Schleifteller können insbesondere Schleifteller mit einer niedrigen Bruchdehnung und einer hohen Viskosität im Bereich des Grundkörpers bereitgestellt werden, während die vorgeschlagenen Schleifteller im Bereich der Kletthakenschicht eine ausreichend hohe Versagensdehnung aufweisen, um die Zwangsentformung der Kletthaken zu ermöglichen.

Durch die Erfindung kann vorteilhafterweise erreicht werden, dass eine Oberfläche des Schleiftellers im Wesentlichen vollständig von der Kletthakenschicht bedeckt ist. Somit steht im Wesentlichen die gesamte Oberfläche des Schleiftellers für die Erzeugung der Klettverschlussverbindung mit dem Schleifaufsatz zur Verfügung, wodurch eine bessere Haftwirkung zwischen Schleifteller und Schleifaufsatz ermöglicht werden kann. Dadurch wird das Risiko eines unerwünschten Ablösens des Schleifaufsatzes von dem Schleifteller erheblich reduziert.

Es ist im Sinne der Erfindung bevorzugt, dass Sub-Strukturen der Mikrostruktur in Reihen auf der Oberfläche des komplex geformten Gegenstands angeordnet vorliegen, wobei die Sub-Strukturen in den Reihen entsprechend der Anordnung der Einzelbleche in dem Blechpaket orientiert sind. Vorzugsweise liegen die Reihen der Sub-Strukturen in gleichmäßigen Abständen zwischen den Begrenzungen der des komplex geformten Gegenstands vor. Es ist im Sinne der Erfindung bevorzugt, dass die Reihen im Wesentlichen äquidistant zueinander angeordnet. Das bedeutet mit anderen Worten, dass die Abstände zwischen den Reihen im Wesentlichen gleich sind. Vorzugsweise weisen die Reihen einen Abstand in einem Bereich von 0,3 bis 2 mm auf, bevorzugt einen Abstand in einem Bereich von 0,5 bis 1,5 mm, besonders bevorzugt einen Abstand von 0,7 bis 1,0 mm und am meisten bevorzugt einen Abstand von 0,8 mm.

Es ist im Sinne der Erfindung bevorzugt, dass die bevorzugt in Reihen angeordneten Sub-Strukturen unterschiedliche Orientierungen aufweisen. Beispielsweise kann eine erste Reihe von Sub-Strukturen eine Orientierung A aufweisen, während eine zweite Reihe von Sub-Strukturen eine Orientierung B aufweisen kann. Wenn die Sub-Strukturen als Kletthaken ausgebildet sind, kann beispielsweise eine erste Reihe von Kletthaken eine Öffnung in eine erste Raumrichtung aufweisen, während die zweite Reihe von Kletthaken eine Öffnung in eine entgegengerichtete Raumrichtung aufweist.

In einem Ausführungsbeispiel der Erfindung ist es bevorzugt, dass die Kletthaken der Reihen abwechselnd im Uhrzeigersinn und gegen den Uhrzeigersinn orientiert sind. Das bedeutet im Sinne der Erfindung bevorzugt, dass die Kletthaken von außen nach innen reihenweise vorliegen, wobei zum Beispiel in der äußersten Schicht die Kletthaken im Uhrzeigersinn orientiert sind (Orientierung A), während die Kletthaken in der zweit-äußersten Schicht gegen den Uhrzeigersinn orientiert sind (Orientierung B). Dadurch ergibt sich vorteilhafterweise ein Orientierungsmuster von abwechselnd A- und B-orientierten radial angeordneten Kletthakenreihen.

Es ist im Sinne der Erfindung bevorzugt, dass eine Oberfläche des komplex geformten Gegenstands im Wesentlichen vollständig den Sub-Strukturen der Mikrostruktur bedeckt ist. Durch die Erfindung kann vorteilhafterweise erreicht werden, dass eine Oberfläche eines Schleiftellers als komplex geformter Gegenstand im Wesentlichen vollständig von bzw. mit der Kletthakenschicht bedeckt ist. Somit steht im Wesentlichen die gesamte Oberfläche des Schleiftellers für die Erzeugung der Klettverschlussverbindung mit dem Schleifaufsatz zur Verfügung, wodurch eine bessere Haftwirkung zwischen Schleifteller und Schleifaufsatz ermöglicht werden kann. Dadurch wird das Risiko eines unerwünschten Ablösens des Schleifaufsatzes von dem Schleifteller erheblich reduziert.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Ansicht einer bevorzugten Ausgestaltung eines vorgeschlagenen Werkzeugeinsatzes
- Fig. 2: weitere Ansicht einer bevorzugten Ausgestaltung des vorgeschlagenen Werkzeugeinsatzes
- Fig. 3: Einsatz einer bevorzugten Ausgestaltung des vorgeschlagenen Werkzeugeinsatzes mit Verzugskissen
- Fig. 4: Ansicht einer bevorzugten Ausgestaltung eines Schleiftellers als Beispiel für einen komplex geformten Gegenstand
- Fig. 5: Ansicht einer bevorzugten Ausgestaltung eines vorgeschlagenen Werkzeugeinsatzes
- Fig. 6: Ansicht einer bevorzugten Ausgestaltung eines Kletthakens mit seinen Abmessungen

### Ausführungsbeispiele und Figurenbeschreibung:

Fig. 1 zeigt eine bevorzugte Ausgestaltung eines vorgeschlagenen Werkzeugeinsatzes 7. Insbesondere zeigt Fig. 1 einen Einsatzrahmen 10, der eine gewölbte Oberfläche 13 aufweist. An diese gewölbte Oberfläche 13 des Einsatzrahmens 10 können die Einzelbleche 11 des mindestens einen Blechpakets 8 anschlagen und so die gewölbte Oberfläche 13 des Einsatzrahmens 10 nachbilden. Im Ergebnis weist auch das Blechpaket 8 eine gewölbte Oberfläche auf und kann diese an den herzustellenden Gegenstand 1 weitergeben. Es ist im Sinne der Erfindung bevorzugt, dass die gewölbte Oberfläche 13 des Einsatzrahmens 10 konkav oder konvex ausgebildet sein kann. Der Begriff «konkav» steht dabei bevorzugt für eine Vertiefung, die beispielsweise wie ein Gebirgstal geformt sein kann. Der Begriff «konvex» steht dabei bevorzugt für eine Erhöhung, die beispielsweise wie ein Berg eines Gebirges geformt sein kann.

Darüber hinaus ist in Fig. 1 ein Schiebe-Element 15 abgebildet, das zusammen mit dem vorgeschlagenen Werkzeugeinsatz 7 ein System zur Herstellung eines komplex geformten Gegenstands 1 bilden kann. Das Schiebe-Element 15 weist eine Oberfläche auf, die als Gegenkontur zu einer gewölbten Oberfläche 13 des Einsatzrahmens 10 ausgebildet ist. Darüber hinaus kann das Schiebe-Element 15 beweglich in einer Öffnung des Einsatzrahmens 10 ausgebildet sein.

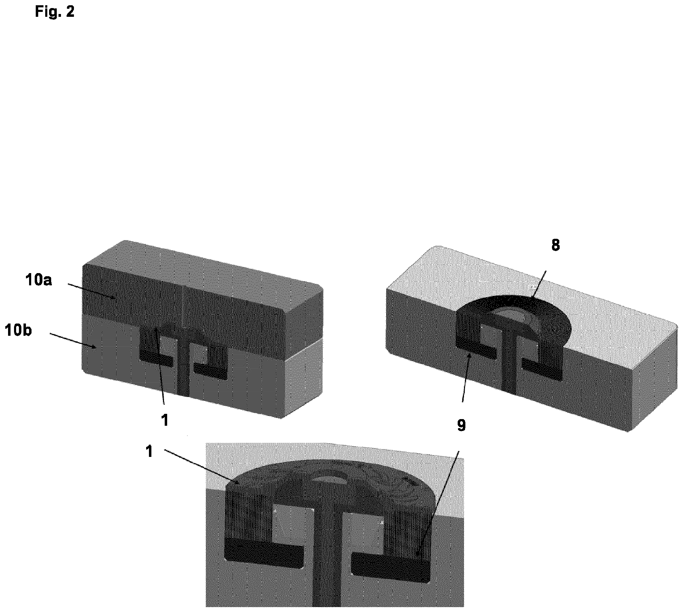

Fig. 2 zeigt eine weitere bevorzugte Ausgestaltung eines vorgeschlagenen Werkzeugeinsatzes 7. Dargestellt ist ein Einsatzrahmen 10, der in dem linken, oberen Bild der Fig. 2 aus einer Oberseite 10a und einer Unterseite 10b gebildet wird. Es ist im Sinne der Erfindung bevorzugt, dass der komplex geformte Gegenstand 1 zwischen den Hälften des Einsatzrahmens 10 ausgeformt wird, insbesondere durch ein Spritzgussverfahren. In dem Einsatzrahmen 10 befindet sich in dem in Fig. 2 dargestellten Ausführungsbeispiel der Erfindung das Blechpaket 8, das aus einer Vielzahl von Einzelblechen 11 gebildet ist. Es ist im Sinne der Erfindung bevorzugt, dass das Blechpaket 8 eine gewölbte Oberfläche aufweist, wobei diese gewölbte Oberfläche durch eine gewölbte Oberfläche 13 in dem Einsatzrahmen 10 zustande kommen kann und/oder durch die Vorsehung eines Verzugskissens 9 in dem Einsatzrahmen 10. Ein solches Verzugskissen 9 ist insbesondere in den Fig. 2, 3 und 5 zu sehen. Das Verzugskissen 9 ist vorzugsweise zwischen dem Blechpaket 8 und dem Einsatzrahmen 10 vorgesehen. Das Blechpaket 8, das in Fig. 2 dargestellt ist, wird im Sinne der Erfindung bevorzugt auch als «gebogenes Blechpaket» 8 bezeichnet, da es mindestens eine gewölbte Oberfläche aufweist.

Mit dem in Fig. 2 dargestellten Werkzeugeinsatz 7 kann insbesondere ein Schleifteller 1 mit angespritzten Kletthaken 4 hergestellt werden. Für den Schleifteller1 ist es vorteilhaft, wenn die Kletthaken 4 in Umfangsrichtung orientiert sind. Zudem ist es bevorzugt, dass die Oberfläche 5 des Schleiftellers 1 sehr eben ist. Der Verzug des Schleiftellers 1 bildet sich in guter Näherung rotationssymmetrisch aus. Dieser rotationssymmetrische Verzug kann durch einen Blecheinsatz 8 aus im Wesentlichen kreisförmig gebogenen Einzelblechen 11 und einem Verzugskissen 9 gegengehalten werden. Das Verzugskissen 9 kann konisch, gerade oder rotationssymmetrisch ausgebildet sein. Es stellt einen wesentlichen Vorteil der Erfindung dar, dass das Verzugskissen verschiedene denkbare Oberflächenformen annehmen kann. Dadurch kann das vorgeschlagene Verfahren und der Werkzeugeinsatz 7 zur Herstellung von ganz unterschiedlichen Gegenständen und Objekten verwendet werden. Es ist im Sinne der Erfindung ganz besonders bevorzugt, dass die Oberfläche bzw. ihre Form durch eine beliebige Funktion des Radius definier- oder festlegbar ist. Eine entsprechende Funktion ist vorzugsweise für alle Rotationswinkel um die Mittelachse identisch bzw. im Wesentlichen identisch.

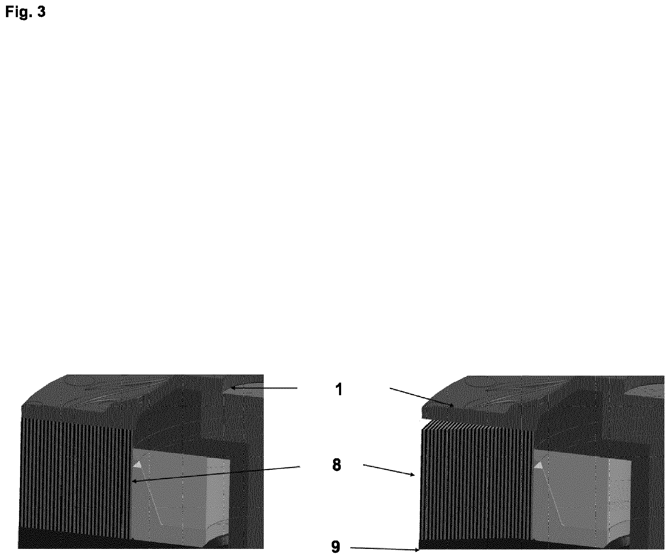

In Fig. 3 ist in der linken Bildhälfte ein gerade ausgebildetes Verzugskissen 9 dargestellt, während in der rechten Bildhälfte ein konisch ausgebildetes Verzugskissen 9 dargestellt ist. Für die Iteration des Werkzeugeinsatzes 7 muss lediglich das bevorzugt rotationssymmetrisch ausgebildete Verzugskissen 9 bearbeitet werden. Vorteilhafterweise ergibt sich die Oberfläche 5 des Schleiftellers 1 entsprechend durch die Möglichkeit der Relativbewegung der Einzelbleche 11. Fixiert wird der Werkzeugeinsatz 7 bevorzugt reibschlüssig durch einen zentralen Spannmechanismus.

Fig. 3 zeigt den Einsatz einer bevorzugten Ausgestaltung des vorgeschlagenen Werkzeugeinsatzes 7 mit Verzugskissen 9. Dabei wird das Verzugskissen 9 insbesondere zum Gegenhalten eines rotationssymmetrischen Verzugs des Schleiftellers 1 verwendet. Dargestellt sind in Fig. 3 insbesondere der Schleifteller 1, das gebogene Blechpaket 8 mit seinen Einzelblechen 11, sowie das gerade oder konisch ausgebildete Verzugskissen 9.

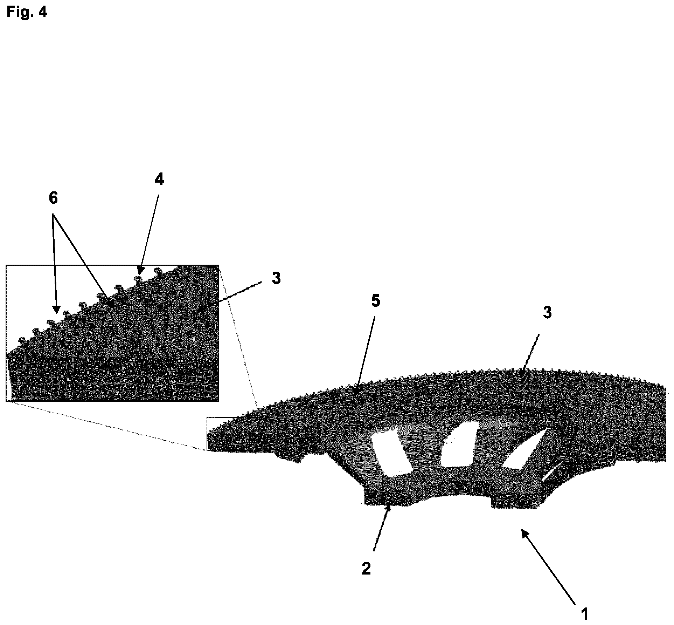

Figur 4 zeigt eine bevorzugte Ausgestaltung eines vorgeschlagenen Schleiftellers 1, wobei der Schleifteller 1 ein Beispiel für einen komplex geformten Gegenstand 1 darstellt. Der Schleifteller 1 umfasst einen Grundkörper 2 und eine Kletthakenschicht 3, die einzelne Kletthaken 4 umfasst. Die Kletthakenschicht 3 entspricht der Mikrostruktur 3 des komplex geformten Gegenstands 1, während die Kletthaken 4 den Sub-Strukturen 4 entsprechen. Die Kletthaken 4 sind vorzugsweise in Reihen 6 angeordnet, die zwischen den Begrenzungen einer Oberfläche 5 des Schleiftellers 1 angeordnet sind. Bei den Reihen handelt es sich bevorzugt um sogenannte radiale Reihen 6, die in gleichmäßigen, vorzugsweise äquidistanten Abständen von außen nach innen auf der Oberfläche 5 des Schleiftellers 1 angeordnet sind. Vorzugsweise sind die Kletthaken 4 in radialen Reihen 6 angeordnet sind, wobei die Kletthaken 4 der radialen Reihen 6 abwechselnd im Uhrzeigersinn und gegen den Uhrzeigersinn orientiert sind. Dadurch wird eine besonders starke und robuste Verbindung zwischen dem Schleifteller 1 und einem Schleifaufsatz (nicht dargestellt), mit dem der Schleifteller 1 mittels einer Klettverschlussverbindung verbunden werden kann, ermöglicht. In Fig. 4 ist gut zu sehen, dass die Kletthaken 4 Öffnungen aufweisen, die in einer Reihe 6 mit A-Orientierung beispielsweise im Uhrzeigersinn ausgerichtet sind, während die Öffnungen der Kletthaken 4 in einer Reihe 6 mit B-Orientierung beispielsweise gegen den Uhrzeigersinn ausgerichtet sind.

Es ist im Sinne der Erfindung bevorzugt, dass die Oberfläche 5 des Schleiftellers 1 als Wirkfläche fungiert und ringförmig ausgebildet ist. Der Grundköper 2 des Schleiftellers 1 ist aus einem faserverstärkten Kunststoff gebildet oder umfasst einen solchen, während die Kletthakenschicht 3 aus einem unverstärkten Kunststoff besteht oder einen solchen umfasst.

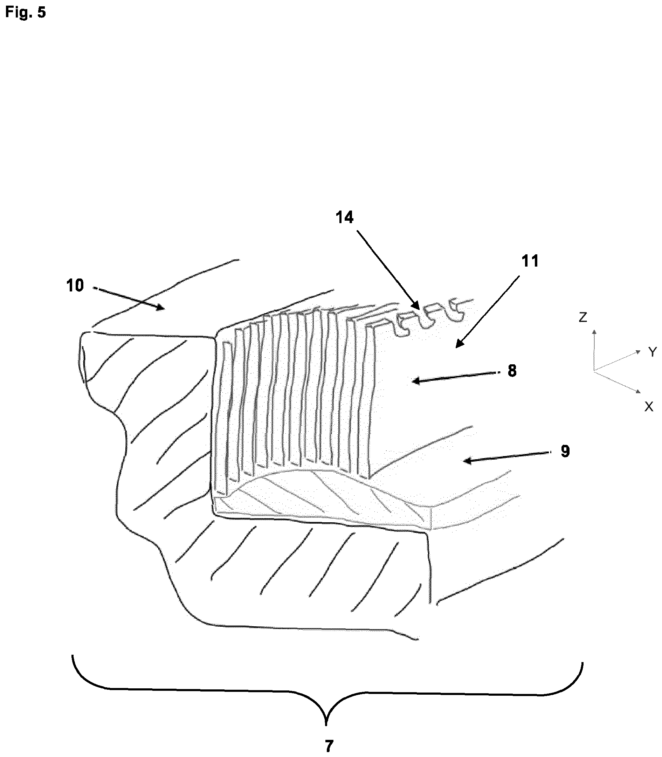

Fig. 5 zeigt eine bevorzugte Ausgestaltung eines Werkzeugeinsatzes 7. Der Werkzeugeinsatz 7 umfasst einen Einsatzrahmen 10, sowie mindestens ein Blechpaket 8. Das Blechpaket 8 ist aus einzelnen Blechen 11 gebildet, die beispielsweise alternierend in den Einsatzrahmen 10 eingesetzt werden können. Zwischen dem Einsatzrahmen 10 und dem Blechpaket 8 kann ein Verzugskissen 9 zum Gegenhalten von etwaigen Verformungen und/oder Verzügen angeordnet vorliegen. Die Einzelbleche 11 des Blechpakets 8 weisen Vertiefungen auf, die im Sinne der Erfindung als negative Mikrostrukturierung 14 bezeichnet wird. Die negative Mikrostrukturierung 14 ist dazu vorgesehen, beim Herstellungsprozess das flüssige Kunststoffmaterial aufzunehmen und ihm seine Form zu geben. Es ist im Sinne der Erfindung bevorzugt, dass die negative Mikrostrukturierung 14 eine negative Abbildung der Kletthakenschicht 3 bzw. der Mikrostruktur 3 darstellt und diese beim Spritzgussverfahren formt.

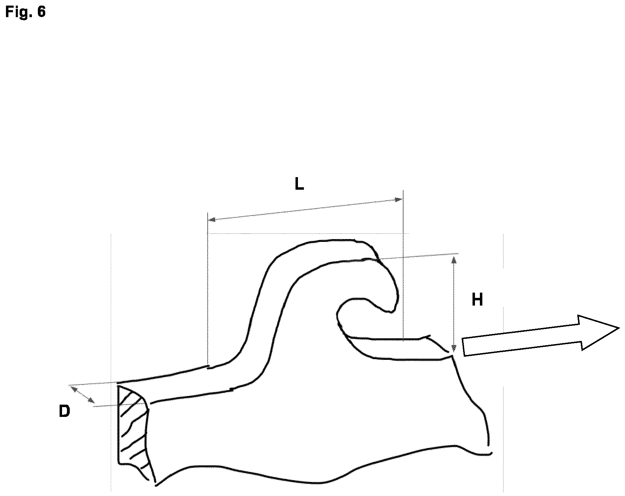

Fig. 6 zeigt eine bevorzugte Ausgestaltung eines Kletthakens 4 mit seinen Abmessungen. Insbesondere zeigt Fig. 6 die Länge L, die Dicke D und die Höhe H eines beispielhaften Kletthakens 4. Die Öffnungs- bzw. Längsrichtung der Kletthaken 4 wird in Fig. 6 durch den zweidimensionalen Pfeil verdeutlicht, der in der Figur nach rechts zeigt. Die Dicke D der Kletthaken 4 kann im Sinne der Erfindung auch als Breite bezeichnet werden. Vorzugsweise entspricht diese Dicke D im Wesentlichen der Breite eines Bleches 11 des Blechpakets 8 abzüglich einer etwaigen Schwindung des Kunststoffs.

### Bezugszeichenliste

- 1: Schleifteller bzw. Gegenstand
- 2: Grundkörper
- 3: Kletthakenschicht
- 4: Kletthaken
- 5: Oberfläche des Schleiftellers
- 6: radiale Reihen
- 7: Werkzeugeinsatz
- 8: Blechpakete
- 9: Verzugskissen
- 10: Einsatzrahmen
10a: Oberseite
10b: Unterseite
- 11: Einzelbleche
- 12: gewölbte Oberfläche des Gegenstands
- 13: gewölbte Oberflächen im Einsatzrahmen
- 14: negative Mikrostrukturierung der Einzelbleche bzw. des Werkzeugeinsatzes
- 15: Schiebe-Element
- L: Länge eines Kletthakens
- D: Dicke oder Breite eines Kletthakens
- H: Höhe eines Kletthakens

## Patentansprüche

1. Werkzeugeinsatz (7) für die Herstellung eines komplex geformten Gegenstands (1) im Spritzguss-Verfahren, wobei der Werkzeugeinsatz (7) einen Einsatzrahmen (10) und mindestens ein Blechpaket (8) mit einer Vielzahl von Einzelblechen (11) umfasst, wobei das mindestens eine Blechpaket (8) in dem Einsatzrahmen (10) eingesetzt vorliegt,
**dadurch gekennzeichnet, dass**
mindestens eine gewölbte Oberfläche (12) in den komplex geformten Gegenstand (1) dadurch einbringbar sind, dass der Einsatzrahmen (10) gewölbte Oberflächen (13) aufweist und/oder mindestens ein Verzugskissen (9) zwischen dem Einsatzrahmen (10) und dem mindestens einen Blechpaket (8) angeordnet vorliegt.

2. Werkzeugeinsatz (7) nach Anspruch 1
**dadurch gekennzeichnet, dass**
die Einzelbleche (11) des Blechpakets (8) unterschiedliche Funktionalitäten aufweisen, die durch eine unterschiedliche Mikrostrukturierung (14) der Einzelbleche (11) vermittelt wird.

3. Werkzeugeinsatz (7) nach Anspruch 1 oder 2
**dadurch gekennzeichnet, dass**
unterschiedlich strukturierte Einzelbleche (11) alternierend innerhalb des mindestens einen Blechpakets (8) des Werkzeugeinsatzes (7) angeordnet vorliegen.

4. Werkzeugeinsatz (7) nach einem der vorhergehenden Ansprüche
**dadurch gekennzeichnet, dass**
das Verzugskissen (9) und/oder die gewölbten Oberflächen (13) des Einsatzrahmens (10) eine Oberflächenlinie einer gewünschten Oberfläche des komplex geformten Gegenstands (1) nachbilden.

5. Werkzeugeinsatz (7) nach einem der vorhergehenden Ansprüche
**dadurch gekennzeichnet, dass**
ein Verzugskissen (9) zum Gegenhalten etwaiger Verzüge ausgebildet ist.

6. Verfahren zur Herstellung eines komplex geformten Gegenstands (1) mit gewölbten Oberflächen (12) unter Verwendung eines Werkzeugeinsatzes (7) nach einem der vorhergehenden Ansprüche
**gekennzeichnet durch die folgenden Verfahrensschritte:**
a) Bereitstellung von mindestens einem Blechpaket (8), das eine Vielzahl von Einzelbleche (11) umfasst,
b) Bereitstellung eines Einsatzrahmens (10) zur Aufnahme des Blechpakets (8), wobei der Einsatzrahmen (10) und das Blechpaket (8) den Werkzeugeinsatz (7) bilden,
c) Einbringen von gewölbten Oberflächen (12) in den komplex geformten Gegenstand (1) **dadurch, dass** der Einsatzrahmen (10) gewölbte Oberflächen (13) aufweist und/oder dadurch dass mindestens ein Verzugskissen (9) zwischen dem Einsatzrahmen (10) und dem mindestens einen Blechpaket (8) angeordnet vorliegt.

7. Komplex geformter Gegenstand (1), der mit dem Verfahren nach Anspruch 6 herstellbar ist, **dadurch gekennzeichnet, dass**
der komplex geformte Gegenstand (1) einen Grundkörper (2) und eine Mikrostruktur (3) auf der Oberfläche (5) des Grundkörpers (2) aufweist, wobei der Grundkörper (2) einen faserverstärkten Kunststoff umfasst und die Mikrostruktur (3) einen unverstärktem Kunststoff umfasst.

8. Komplex geformter Gegenstand (1) nach Anspruch 7
**dadurch gekennzeichnet, dass**
Sub-Strukturen (4) der Mikrostruktur (3) in Reihen (6) auf der Oberfläche (5) des komplex geformten Gegenstands (1) angeordnet vorliegen, wobei die Sub-Strukturen (4) in den Reihen (6) entsprechend der Anordnung der Einzelbleche (11) in dem Blechpaket (8) orientiert sind.

9. Komplex geformter Gegenstand (1) nach Anspruch 8
**dadurch gekennzeichnet, dass**
eine Oberfläche (5) des komplex geformten Gegenstands (1) im Wesentlichen vollständig mit den Sub-Strukturen (4) der Mikrostruktur (3) bedeckt ist.

10. System zur Herstellung eines komplex geformten Gegenstands (1), wobei das System einen Werkzeugeinsatzes (7) nach einem der Ansprüche 1 bis 5 umfasst, sowie ein Schiebe-Element (15),
**dadurch gekennzeichnet, dass**
das Schiebe-Element (15) eine Oberfläche aufweist, die als Gegenkontur zu einer gewölbten Oberfläche (13) des Einsatzrahmens (10) ausgebildet ist.

11. System nach Anspruch 10
**dadurch gekennzeichnet, dass**
das Schiebe-Element (15) beweglich in einer Öffnung des Einsatzrahmens (10) ausgebildet ist.
